# EUROPEAN PATENT APPLICATION

(11) **EP 1 736 453 A1**
(43) Date of publication of application: **27.12.2006**
(21) Application number: 05728892.0
(22) Date of filing: 31.03.2005
(51) Int. Cl.: C03C 17/30, B32B 17/06, C09D 7/12, C09D 183/02

(54) **INFRARED CUT GLASS**

(30) Priority: 31.03.2004 JP 2004104503; 28.04.2004 JP 2004134634; 17.09.2004 JP 2004271618
(71) Applicant: Nippon Sheet Glass Company, Limited, Tokyo 105-8552 (JP)
(72) Inventor: KAMITANI, Kazutaka c/o Nippon Sheet Glass Comp.Ltd, Minato-ku, Tokyo 105-8552 (JP); INOGUCHI, Kazuyuki c/o Nippon Sheet Glass Comp.Ltd, Minato-ku, Tokyo 105-8552 (JP); SASAKI, Teruyuki c/o Nippon Sheet Glass Comp.Ltd;, Minato-ku, Tokyo 105-8552 (JP); IWAI, Nobuki c/o Nippon Sheet Glass Comp.Ltd;, Minato-ku, Tokyo 105-8552 (JP); OGAWA, Hisashi c/o Nippon Sheet Glass Comp.Ltd.;, Minato-ku, Tokyo 105-8552 (JP); MUROMACHI, Takashi c/o Nippon Sheet Glass Comp.Ltd, Minato-ku, Tokyo 105-8552 (JP)
(74) Representative: Kohler Schmid Möbus
(86) International application number: PCT/JP2005/006826
(87) International publication number: WO 2005/095298

(57) **Abstract**

An infrared ray-cutting glass according to which the capability of an IR-cutting component can be sufficiently maintained while securing sufficient hardness. The IR-cutting glass 100 is comprised of a glass substrate 20, and an IR-cutting film 10 containing ITO fine particles 12 as an infrared ray-cutting component. The IR-cutting film 10 is formed, using an infrared ray-cutting component not containing a fluorine component, on a surface of the glass substrate 20 by a sol-gel method carried out at a low temperature of less than 350°C. The IR-cutting glass 100 having the IR-cutting glass 10 has a haze of not more than 7% after a wear resistance test carried out on the surface on which the IR-cutting film 10 is formed.

## Description

### Technical Field

The present invention relates to an infrared ray-cutting glass, and in particular relates to an infrared ray-cutting glass in which an infrared ray-cutting film containing an infrared ray-cutting component is formed on at least one surface of a glass substrate.

### Background Art

In an infrared ray (IR)-cutting glass, an IR-cutting film containing a component that cuts out (shields against) IR is formed on a surface of a glass substrate. ITO (indium tin oxide) fine particles can be used as the IR-cutting component. A sol-gel method is used to form the IR-cutting film; the IR-cutting film is solidified in a gel state, whereby the IR-cutting component is fixed in a state dispersed in the IR-cutting film. The sol-gel method is carried out at a low temperature of not more than 250°C to suppress decreasing of the IR shielding capability of the IR-cutting component (see, for example, Japanese Laid-open Patent Publication (Kokai) No. S63-268772 and Japanese Laid-open Patent Publication (Kokai) No. 2002-088304).

In contrast with this, according to an infrared shielding glass described in International Patent Publication No. 2004/011381, the sol-gel method can be carried out even at a high temperature of not less than 350°C by using an ITO powder containing a fluorine component having excellent heat resistance. The fluorine component is introduced into the IR-cutting film in a state in which the ITO fine particles are thermally protected.

Moreover, the film obtained through the sol-gel method generally comprises a silica film made of a silica component having silica as a building block thereof, whereas organic-inorganic composite films comprised of organic material and inorganic material have also been proposed (see, for example, Japanese Patent No. 2574049, Japanese Patent No. 2680434, and Japanese Laid-open Patent Publication (Kokai) No. 2002-338304). According to such an organic-inorganic composite film, characteristics that cannot be obtained with a silica film can be given to the IR-cutting film, for example the IR-cutting film can easily be made thick.

However, with a film as described in Japanese Laid-open Patent Publication (Kokai) No. S63-268772 or Japanese Laid-open Patent Publication (Kokai) No. 2002-088304, although a decrease in the IR shielding capability of the IR-cutting component can be suppressed due to carrying out the sol-gel method at a low temperature of not more than 250°C, sufficient hardness (wear resistance) cannot be secured for the IR-cutting glass.

Moreover, if the ITO powder is made to contain a fluorine component so that the sol-gel method can be carried out at a high temperature of not less than 350°C as described in International Patent Publication No. 2004/011381, then including the fluorine component incurs a cost, and moreover the cost of energy for heating is increased. Furthermore, when attempting to obtain a film having sufficient hardness and thickness, the film is prone to cracking, and hence manufacture is difficult.

Furthermore, with an organic-inorganic composite film as described in Japanese Patent No. 2574049, Japanese Patent No. 2680434, or Japanese Laid-open Patent Publication (Kokai) No. 2002-338304, although the organic-inorganic composite film can be made thick, when attempting to make the hardness high, the IR-cutting film may crack, and hence it is not possible to obtain both sufficient hardness and sufficient thickness.

It is an object of the present invention to provide an infrared ray-cutting glass according to which the capability of an IR-cutting component can be sufficiently maintained while securing sufficient hardness.

The above and other objects, features, and advantages of the invention will become more apparent from the following detailed description taken in conjunction with the accompanying drawings.

### Disclosure of the Invention

To attain the above object, in an aspect of the present invention, there is provided an infrared ray-cutting glass in which an infrared ray-cutting film is formed on at least one surface of a glass substrate, characterized in that the infrared ray-cutting film contains an infrared ray-cutting component in an organic-inorganic composite film in which are composited organic material and an inorganic oxide, and the infrared ray-cutting glass has a haze of not more than 7% measured after a wear resistance test being carried out on the surface on which the infrared ray-cutting film is formed in accordance with Japanese Industrial Standards JIS R 3212.

According to the above construction, the haze measured after the wear resistance test is not more than 7%, whereby the capability of the IR-cutting component can be sufficiently maintained while securing sufficient hardness.

Preferably, the haze is not more than 4%.

According to the above construction, the haze measured after the wear resistance test is not more than 4%, whereby yet better hardness can be secured, for example use as automobile glass is possible.

Preferably, the content of the infrared ray-cutting component is in a range of 20 to 45% relative to the total mass of the infrared ray-cutting film.

According to the above construction, the content of the infrared ray-cutting component is in a range of 20 to 45% relative to the total mass of the infrared ray-cutting film. As a result, infrared rays can be cut out reliably.

Preferably, the infrared ray-cutting component comprises a component not containing a fluorine component.

According to the above construction, the infrared ray-cutting component comprises a component not containing a fluorine component. As a result, the cost of including a fluorine component can be reduced.

Preferably, the infrared ray-cutting component contains ITO fine particles and/or ATO fine particles.

According to the above construction, the infrared ray-cutting component contains ITO fine particles and/or ATO fine particles. As a result, the IR shielding capability of the infrared ray-cutting component can be secured reliably.

More preferably, the ITO fine particles and/or ATO fine particles have a particle diameter of not more than 100 nm.

According to the above construction, the ITO fine particles and/or ATO fine particles have a particle diameter of not more than 100 nm. As a result, the infrared cutting efficiency is good, and the occurrence of haze due to the particle diameter of the fine particles being large can be suppressed.

Preferably, the content of the organic material is in a range of 2 to 60% relative to the total mass of the infrared ray-cutting film.

According to the above construction, the content of the organic material is in a range of 2 to 60% relative to the total mass of the infrared ray-cutting film. As a result, cracking is not prone to occurring even in the case that the infrared ray-cutting film is thick.

More preferably, the organic material contains a hydrophilic organic polymer.

According to the above construction, the organic material contains a hydrophilic organic polymer. As a result, the effect for the infrared ray-cutting film described for claim 7 can be achieved reliably.

Yet more preferably, the hydrophilic organic polymer comprises one of a polyalkylene oxide and a polyalkylene oxide thermal decomposition product.

According to the above construction, the hydrophilic organic polymer comprises one of a polyalkylene oxide and a thermal decomposition product of such a polyalkylene oxide. As a result, the above effect can be achieved reliably.

Preferably, the inorganic oxide is silica.

According to the above construction, the inorganic oxide is silica. As a result, the hardness of the infrared ray-cutting film can be increased.

Preferably, the content of the inorganic oxide is in a range of 20 to 78% relative to the total mass of the infrared ray-cutting film.

According to the above construction, the content of the inorganic oxide is in a range of 20 to 78% relative to the total mass of the infrared ray-cutting film. As a result, sufficient hardness can be secured.

More preferably, the content of the inorganic oxide is in a range of 40 to 78% relative to the total mass of the infrared ray-cutting film.

According to the above construction, the content of the inorganic oxide is in a range of 40 to 78% relative to the total mass of the infrared ray-cutting film. As a result, the above effect can be achieved reliably.

Preferably, the infrared ray-cutting film has a thickness in a range of 200 to 4000 nm.

According to the above construction, the infrared ray-cutting film has a thickness in a range of 200 to 4000 nm. As a result, the content of the infrared ray-cutting component in the thickness direction of the infrared ray-cutting film is high, and hence the infrared cutting capability can be improved.

Preferably, the thickness of the infrared ray-cutting film decreases by not less than 10% upon heating at 600°C.

According to the above construction, the thickness of the infrared ray-cutting film decreases by not less than 10% upon heating at 600°C. As a result, the infrared ray-cutting film is not a completely sintered body but rather has scope for shrinking, and hence cracking can be suppressed.

Preferably, the infrared ray-cutting glass is characterized by having a transmissivity to light of wavelength 1000 to 1600 nm of not more than 30%, and a transmissivity to light of wavelength 1600 to 2500 nm of not more than 20%.

According to the above construction, the transmissivity to light of wavelength 1000 to 1600 nm is not more than 30%, and the transmissivity to light of wavelength 1600 to 2500 nm is not more than 20%. As a result, a decrease in the infrared cutting capability can be reliably suppressed.

Preferably, the infrared ray-cutting glass is characterized by being used as window glass for a mobile object, a vehicle, or a building.

According to the above construction, the infrared ray-cutting glass is used as window glass for a mobile object, a vehicle, or a building. As a result, a comfortable space can be provided, with sufficient hardness being secured, a decrease in the IR shielding capability of the IR-cutting component being suppressed, and the cost being reduced.

Preferably, the infrared ray-cutting film is formed on the glass substrate by a sol-gel method, and a firing temperature at which the infrared ray-cutting film is solidified in a gel state while carrying out the sol-gel method is in a range of 100 to 350°C.

According to the above construction, the infrared ray-cutting film is formed on the glass substrate by a sol-gel method carried out with a firing temperature in a range of 100 to 350°C. As a result, the infrared cutting capability of the infrared ray-cutting component can be secured reliably.

Preferably, the firing temperature is not more than 250°C.

According to the above construction, the firing temperature is not more than 250°C. As a result, the infrared cutting capability of the infrared ray-cutting component can be secured more reliably.

Preferably, the glass substrate is made of soda-lime silica glass.

According to the above construction, the glass substrate is made of soda-lime silica glass. As a result, the hardness of the infrared ray-cutting glass can be increased reliably.

Preferably, the organic-inorganic composite film contains phosphorus.

### Brief Description of the Drawings

FIG. 1 is a sectional view schematically showing the construction of an infrared ray-cutting glass according to an embodiment of the present invention; and
FIG. 2 is a graph showing optical properties of IR-cutting glasses of examples of the present invention.

### Best Mode for Carrying Out the Invention

The present inventors carried out assiduous studies to attain the above object, and as a result discovered that in the case of an infrared ray-cutting glass in which an infrared ray-cutting film is formed on at least one surface of a glass substrate, if the infrared ray-cutting film comprises a film containing an infrared ray-cutting component in an organic-inorganic composite film in which are composited organic material and an inorganic oxide, and the infrared ray-cutting glass has a haze of not more than 7% measured after a wear resistance test has been carried out on the surface on which the infrared ray-cutting film is formed in accordance with Japanese Industrial Standards JIS R 3212, then the capability of the IR-cutting component can be sufficiently maintained while securing sufficient hardness. Moreover, the present inventors discovered that the infrared ray-cutting film can be made thick.

The present invention was accomplished based on the results of the above studies.

Embodiments of the present invention will now be described in details with reference to the drawings.

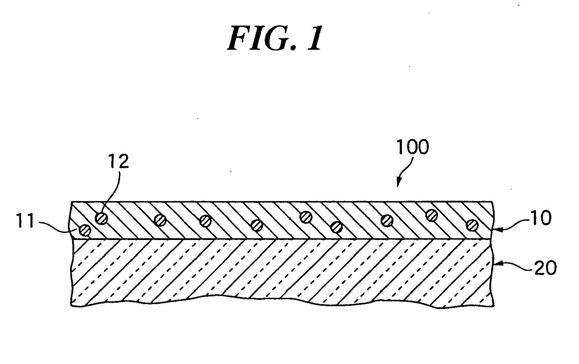

FIG. 1 is a sectional view schematically showing the construction of an infrared ray-cutting glass according to an embodiment of the present invention.

As shown in FIG. 1, an infrared ray (IR) cutting glass 100 is comprised of a glass substrate 20 as a base member, and an IR-cutting film 10 formed by a sol-gel method, described below, to a thickness of 200 to 4000 nm (0.2 to 4 µm) on a surface of the glass substrate 20. The IR-cutting film 10 is constituted from a matrix 11 containing organic material and a silica component having silica (SiO₂) as a building block, and ITO (indium (In) tin (Sn) oxide) fine particles 12 as an IR-cutting component dispersed in the matrix 11. The IR-cutting component cuts out (shields against) IR so as to give the glass substrate 20 a heat shielding capability and IR shielding capability.

The glass substrate 20 may be made of any glass having high hardness, for example soda-lime silica glass. Types of such soda-lime silica glass include uncolored glass, colored glass such as green glass, gray glass or blue glass, and also glass having a UV cutting capability, and glass for which the transmissivity to visible light is made to be low so as to maintain privacy; such types of soda-lime silica glass are suitable for use in the case that the infrared ray-cutting glass of the present invention is used for a vehicle.

A sol-gel method, described below, is used to disperse the ITO fine particles 12 in the matrix 11. The ITO fine particles 12 are fixed in a state dispersed in the matrix 11 upon the sol-state matrix 11 solidifying through the sol-gel method. The content of the ITO fine particles 12 in the state fixed in the matrix 11 is in a range of 20 to 45% relative to the total mass of the IR-cutting film 10. If the content of the ITO fine particles 12 is less than 20 mass%, then the IR shielding capability of cutting out infrared rays becomes low, whereas if this content exceeds 45 mass%, then the hardness of the matrix 11 decreases.

Moreover, the particle diameter of the ITO fine particles 12 is not more than 100 nm, preferably not more than 40 nm, more preferably in a range of 1 to 40 nm. As a result, the infrared ray-cutting efficiency is good, and the occurrence of haze due to the particle diameter of the fine particles being large can be suppressed.

As a method of obtaining a hard film through the sol-gel method, a method of heating at a high temperature of not less than 350°C is known. However, for the ITO fine particles 12 used as the IR-cutting component, the heat shielding capability and IR shielding capability decrease upon heating at a temperature higher than 250°C, and hence if the sol-gel method is carried out under a high temperature of not less than 350°C, then it may be necessary to use a fluorine component-containing ITO powder as the IR-cutting component (see International Patent Publication No. 2004/011381). If such a fluorine component-containing ITO powder is used, then including the fluorine component incurs a cost. Accordingly, in the manufacturing technique for manufacturing the infrared ray-cutting glass according to the present embodiment, to reduce the cost, an IR-cutting component not containing a fluorine component is used, and the sol-gel method is carried out at a temperature in a range of 100 to 350°C, preferably not more than 250°C. Even with this manufacturing technique, sufficient hardness can be secured for the IR-cutting film 10, and moreover the capability such as heat shielding capability or IR shielding capability of the ITO fine particles 12 can be sufficient maintained.

As the organic material in the IR-cutting film 10, a hydrophilic organic polymer, for example one of a polyalkylene oxide and a thermal decomposition product of such a polyalkylene oxide is used. This organic material is composited with an inorganic oxide containing a silica component such as a silicon alkoxide, the matrix 11 being formed as a result. That is, the matrix 11 is an organic-inorganic composite film comprised of an organic-inorganic composite in which the organic material and the inorganic oxide are bonded or combined together at a molecular level.

The content of the organic material is in a range of 2 to 60% relative to the total mass of the IR-cutting film 10. If the content of the organic material is less than 2 mass%, then a shrinkage relaxation effect, described below, is no longer sufficiently obtained, and hence the possibility of cracking occurring when forming a thick film is increased. On the other hand, if this content exceeds 60 mass%, then the content of the organic material in the IR-cutting film is too high, and hence sufficient hardness can no longer be obtained.

The content of the silica component in the IR-cutting film 10 is in a range of 20 to 78%, preferably 40 to 78%, relative to the total mass of the IR-cutting film 10. If the content of the silica component is less than 20 mass%, then the IR-cutting glass 100 cannot have a haze of not more than 7% measured after a wear resistance test (Taber abrasion test), described below, has been carried out on the surface on which the IR-cutting film 10 is formed. The concentration of the silica component in a starting material for the matrix 11 that is added to a solution used in the sol-gel method, described below, is in a range of 20 to 40 mass%.

The above concentration of the silica component (mass%) is calculated as the content of the silica that is the building block of the silica component. For example, even in the case that the organic material and the silica (silicon oxide) form an amorphous composite, the mass percentage of the silica component is calculated as the content of silica.

In the above manufacturing technique, desired characteristics for the IR-cutting glass 100 can be obtained by firing at a temperature lower than the temperature at which the heat shielding capability and IR shielding capability of the ITO fine particles 12 can be maintained and the decomposition temperature of the functional material, for example 200°C. As a result, an IR-cutting glass 100 in which the thermally unstable ITO fine particles 12 and other functional material are introduced into the IR-cutting film 10 can be provided with no impairment of the capabilities of the ITO fine particles 12 or other functional material.

The IR-cutting glass 100 having the IR-cutting film 10 has a haze of not more than 7% measured after a wear resistance test, described below, in accordance with Japanese Industrial Standards JIS R 3212 (Test Method of Safety Glazing Materials for Road Vehicles) (hereinafter merely referred to as the "wear resistance test") carried out on the surface on which the IR-cutting film 10 is formed. The lower the haze measured after the wear resistance test, the higher the hardness. If this haze is not more than 7%, then sufficient hardness for, for example, window glass for a mobile object or a vehicle such as an automobile or a train or window glass for a building can be secured. The haze measured after the wear resistance test is preferably not more than 4%. As a result, a hardness suitable for automobile glass can be secured reliably. Such a hardness can be secured by carrying out the sol-gel method as described below.

Following is a description of one embodiment of using the sol-gel method to form a film for which sufficient hardness (a haze after the wear resistance test of not more than 7%) can be obtained even if the heating is carried out at less than 350°C.

In outline, the sol-gel method is carried out as follows:
A sol solution (forming solution) is prepared by adding materials such as a silicon alkoxide as a starting material for the matrix 11, water, a catalyst such as an acid, the ITO fine particles 12, another functional material or the like, and a hydrophilic organic polymer, to a predetermined solvent, e.g. ethanol. The added materials are dispersed or dissolved in the sol solution. In the solution, the water and the catalyst cause the silicon alkoxide to undergo hydrolysis and dehydration condensation polymerization, to produce an oligomer having a siloxane bond therein. Note that the sol solution may be one obtained by adding the required materials to a commercially available sol solution.

The above functional material preferably comprises fine particles to facilitate dispersion in the IR-cutting film 10.

The hydrophilic organic polymer is preferably added to the solution since then cracking can be suppressed even in the case that the IR-cutting film 10 is made thick. The reason for this is thought to be that the hydrophilic organic polymer gets in between the silanol groups, whereby structural changes that occur when pores shrink upon the gel solidifying can be flexibly followed, so that stress in the IR-cutting film 10 is relaxed.

As the hydrophilic organic polymer, an organic compound having a polyether group therein, a polyether having a hydrophilic functional group at an end thereof, or the like can be used. As an organic compound having a polyether group therein, it is preferable to use a polyalkylene oxide such as polyethylene glycol or polypropylene glycol, a phosphate type surfactant having a polyether group therein, or the like.

Moreover, as a polyether, for example, one in which phosphorus is introduced into a functional group of a predetermined surfactant such as a polyether phosphate ester type surfactant can be used. To add phosphorus to the sol solution, for example, phosphorus may be introduced into a functional group of the above polyalkylene oxide, or a phosphoric acid may be separately added to the sol solution. As the phosphoric acid, orthophosphoric acid is preferable. The amount of phosphorus added to the sol solution may be low. The phosphorus in particular acts as a hardening catalyst when the IR-cutting film 10 is formed. Moreover, phosphorus does not evaporate at temperatures up to 400°C, and hence remains in the IR-cutting film 10. Furthermore, phosphorus can have any of a plurality of valencies, and hence the valency can be changed in accordance with the state of the IR-cutting film 10; as a result, residual stress in the IR-cutting film 10 is not increased, and a decrease in the hardness of the IR-cutting film 10 can be prevented. It is thus preferable to add phosphorus to the sol solution.

Moreover, the above surfactant acts as a dispersant when fine particles such as the ITO fine particles 12 and colloidal silica are dispersed in the IR-cutting film 10. In particular, it is preferable to use a phosphate type surfactant having a polyether group therein, since the ability to disperse the fine particles is excellent, and moreover there is an effect of reducing the stress in the film overall and hence suppressing cracking.

A hydrophilic organic polymer as above is preferably added in an amount in a range not exceeding the mass percentage (concentration) of the silicon alkoxide silica component. This is because the hydrophilic organic polymer remains in the IR-cutting film 10 after the gel has been hardened by heating, and if the amount remaining is high then the strength and hardness of the IR-cutting film 10 will decrease.

Next, the prepared sol solution is coated onto a surface of the glass substrate 20. After that, the glass substrate 20 onto which the sol solution has been coated is subjected to heat treatment as required, whereby the sol solution is dried. As a result, the sol solution solidifies via a gel state, and hence the IR-cutting film 10 is formed on the surface of the glass substrate 20 in a state in which the ITO fine particles 12 are dispersed in the matrix 11, whereby the IR-cutting glass 100 is manufactured.

During the above heat treatment, water and solvent progressively evaporate off from the sol solution that has been coated onto the surface of the glass substrate 20, and hence the sol solution gradually loses its fluidity and moves into a semi-solid gel state (gelates). As a result, the silicon alkoxide that was in the form of an oligomer in the sol solution is concentrated so that the reaction described above proceeds and a siloxane polymer of high molecular weight is produced. In the siloxane polymer, the siloxane bonds form an enlarged network (a gel framework), spaces in the gel framework immediately after the gelation being filled with the solvent and water. Upon drying of the gel in which the water and solvent evaporate out from the spaces in the gel framework, the spaces shrink while the siloxane polymer solidifies to form a silica-based film component, whereby the matrix 11 is formed.

A more detailed description of the relationship between the reaction and the temperature in the heat treatment carried out in the above sol-gel method will now be described.

First, upon heat treatment being carried out in a temperature range of 100 to 150°C, the water and solvent contained in the solution evaporate off. Then, upon heating up to a temperature range of 250 to 400°C, if the ITO fine particles 12 and other functional material, in particular organic material, have been added to the solution, then these undergo thermal decomposition or evaporate off. Moreover, even though the gel solidifies in the temperature range of 250 to 400°C, the spaces in the gel framework that were filled with the solvent or water in the gel state do not completely shrink (are not completely filled in), and hence the spaces in the gel framework remain as pores, and thus sufficient hardness cannot be said to have been secured for the IR-cutting film 10. To obtain a hard IR-cutting film 10 with no pores therein, it is thus necessary to further carry out heat treatment at a higher temperature, for example a temperature of not less than 500°C.

The heat treatment in the sol-gel method is thus generally carried out at a temperature of not less than 500°C, but in the case that ITO fine particles 12 are present in the solution as in the embodiment of the present invention, the IR shielding capability of the ITO fine particles 12 will decrease at a temperature exceeding 250°C. In the embodiment of the present invention, the heat treatment is thus carried out at a temperature in a range of 100 to 350°C, preferably not more than 250°C.

The IR-cutting film 10 is obtained, for example, by carrying out heat treatment at a temperature in a range of 100 to 350°C, preferably not more than 250°C, on a solution that has been made to have a pH in a predetermined range, described below, by adjusting the concentration of the acid and the amount of water in the solution as described below. The IR-cutting film 10 thus obtained is compact, having a hardness similar to that of molten glass, and not being prone to cracking.

The reason for preparing the pH of the solution is as follows:
As described above, there are spaces in the gel framework filled with the solvent or water. The size of these spaces depends on the form of the polymer (condensate) comprised of the silicon alkoxide oligomer or siloxane polymer in the solution, and the form of this polymer varies greatly with the pH of the solution.

Specifically, in an alkaline solution, the silicon alkoxide oligomer tends to grow into spherical structures. As such spherical structures are dried, because the structures are spherical, a plurality of the spherical structures cannot lie on top of one another, and hence an IR-cutting film 10 having relatively large spaces (pores) therein is obtained. In this case, the IR-cutting film 10 is not prone to cracking when the solvent or water evaporates out from the large spaces, but a sufficient hardness cannot be secured.

On the other hand, in an acidic solution, the silicon alkoxide oligomer tends to grow into straight chain structures. As the solution containing these straight chain structures is dried, the plurality of straight chain structures lie on top of one another, and hence a compact IR-cutting film 10 having relatively small spaces (pores) therein and thus sufficient hardness is obtained. However, because the plurality of straight chain structures are in a state lying on top of one another, the IR-cutting film 10 is prone to cracking when the solvent or water evaporates out from the spaces between the structures.

The present inventors thus carried out detailed studies on the concentration of the acid and the amount of the water within an acidic pH region for the solution in which an IR-cutting film 10 having a sufficient hardness can be formed, and as a result discovered a concentration range in which cracking of the IR-cutting film 10 does not arise even if the IR-cutting film 10 is thick.

Here, it is known that a compound containing silanol groups, for example a silicon alkoxide, has an isoelectric point of 2. This indicates that the silanol groups can exist in the solution most stably when the pH of the solution is 2.

For example, in a region around this pH, a silicon alkoxide molecule from which one alkoxyl group has separated away through hydrolysis is stabilized in a state having a silanol group. In the case that the silicon alkoxide is a tetraalkoxysilane having four alkoxyl groups, a silicon alkoxide from which one of the alkoxyl groups has separated away through hydrolysis and thus having three alkoxyl groups is stabilized in a state having a silanol group.

That is, even in the case that a large amount of hydrolyzed silicon alkoxide is present in the solution, if the pH of the solution is approximately 2, then the probability of the silicon alkoxide being present in the solution in the form of oligomers bonded together by a siloxane bond formed through a dehydration condensation reaction is very low, and the probability of the silicon alkoxide being present in the solution in the form of a monomer or a low polymer bonded together by a siloxane bond is high.

To make the pH of the solution be approximately 2, a strong acid is added to the sol solution, such as to make the proton molality (hereinafter referred to as the "proton concentration") assuming complete dissociation of protons from the strong acid be in a range of 0.001 to 0.1 mol/kg. As a result, the pH of the solution can be made to be in a range of approximately 1 to 3, whereby a solution in which silanol groups are stable can be prepared. Note that the reason for making the above proton concentration be in a range of 0.001 to 0.1 mol/kg is that it is difficult to accurately determine the degree of dissociation of the acid in the mixed solution in which are mixed an organic solvent and water.

Examples of the strong acid include hydrochloric acid, nitric acid, trichloroacetic acid, trifluoroacetic acid, sulfuric acid, phosphoric acid, methanesulfonic acid, p-toluenesulfonic acid, and oxalic acid. Moreover, the strong acid is preferably a volatile strong acid that evaporates from the solution upon heating. The reason for this is that acid remaining inside the IR-cutting film 10 after solidification will hamper formation of bonds, for example siloxane bonds, within the silica component of the IR-cutting film 10, causing a decrease in the hardness of the IR-cutting film 10.

Because a solution for which the degree of polymerization of the silicon alkoxide has been controlled by controlling the pH of the solution to be in a range of 1 to 3 as described above is coated onto the surface of the glass substrate 20 and dried, partially polymerized silicon alkoxide molecules are arranged compactly, and hence an IR-cutting film 10 having small pores and not being prone to cracking can be formed.

Moreover, because the form of the silicon alkoxide polymer molecules in the solution is controlled, the thickness of the IR-cutting film 10 can be controlled to some extent within a range of 200 to 4000 nm. Furthermore, because cracking can be suppressed even if the IR-cutting film 10 has a thickness exceeding 200 nm, the IR-cutting film 10 can be made thick, whereby the content of the ITO fine particles 12 in the thickness direction of the IR-cutting film 10 can be made high. The IR shielding capability of the IR-cutting glass 100 can thus be improved.

The IR-cutting film 10 obtained as described above is compact, and yet upon heating the IR-cutting film 10 at 200 to 300°C, the IR-cutting film 10 will not exceed a certain hardness due to hydrolysis of the silicon alkoxide being insufficient. It is thus preferable to promote hydrolysis of the silicon alkoxide, thus achieving a state in which the IR-cutting film 10 will readily harden (gelate) at a low temperature.

To promote hydrolysis of the silicon alkoxide, in the present embodiment, when preparing the sol solution, water is added to the solution in advance in an amount equal to or exceeding that required to hydrolyze the silicon alkoxide. That is, the amount of water in moles is not less than four times the number of moles of silicon atoms in the silicon alkoxide. As a result, hydrolysis of the silicon alkoxide can be made to proceed sufficiently, and hence even if the heat treatment is carried out only at a temperature of less than 350°C, an IR-cutting film 10 having high hardness can be obtained. The amount of water in moles is more preferably 5 to 20 times the number of moles of silicon atoms in the silicon alkoxide. As a result, the silicon alkoxide can be hydrolyzed reliably, and hence a sufficient hardness can be secured for the IR-cutting film 10.

For example, in the case that the silicon alkoxide is a tetraalkoxysilane, stoichiometrically 4 moles of water are added to the solution per mole of the tetraalkoxysilane.

Moreover, in the case of a tetraalkoxysilane polymer, taking the number of moles of Si atoms contained in the polymer to be n, the number of moles of water required for the hydrolysis is 2n+2 moles stoichiometrically. Accordingly, the higher the degree of polymerization of the alkoxysilane starting material used, the lower the number of stoichiometric moles of the water required for the hydrolysis per mole of Si atoms. Nevertheless, even in the case of using an already polymerized silicon alkoxide as the starting material, it is still preferable to add the water in an amount of at least 4 moles per mole of Si atoms. The water is more preferably added in an amount of 5 to 20 moles per mole of Si atoms. As a result, an IR-cutting film 10 having a high hardness can be obtained reliably upon carrying out the heat treatment at only a temperature of less than 350°C.

The reason for this is that in the case, for example, that the viscosity of the solution is low, and the amount of water in the solution is stoichiometrically necessary and sufficient relative to the amount of Si atoms, the water is sufficiently diffused through the solution before the solution is heated, and hence the hydrolysis of the silicon alkoxide proceeds, but upon progressively drying by heating the solution, the viscosity of the solution increases and hence the fluidity of the solution decreases, and thus the water can no longer diffuse sufficiently through the solution, whereby the hydrolysis of the silicon alkoxide can no longer proceed sufficiently.

In the present embodiment, the heat treatment carried out in the sol-gel method is carried out at a temperature of less than 350°C, preferably not more than 250°C.

The lower limit of the temperature in the heat treatment can be selected as appropriate in accordance, for example, with the hardness required of the IR-cutting film 10. For example, by drying at approximately room temperature, an IR-cutting film 10 of hardness approximately "B" as measured using a pencil hardness test can be obtained. Moreover, an IR-cutting film 10 of such hardness approximately "H" can be obtained through heat treatment at a temperature up to 90°C, and an IR-cutting film 10 of such hardness not less than "9H" can be obtained through heat treatment at a temperature up to 120°C. Furthermore, if the heat treatment is carried out at a temperature of not less than 150°C, then an IR-cutting film 10 of hardness exceeding that measurable by the pencil hardness test can be obtained.

Such a hardness exceeding that measurable by the pencil hardness test can be evaluated using the wear resistance test described earlier. Specifically, the hardness of the IR-cutting film 10 may be evaluated by measuring the haze using a commercially available haze meter after carrying out a wear test with a load of 4.9 N (500 g) at 1000 revs on the surface having the IR-cutting film 10 formed thereon using a commercially available Taber abrasion tester. The hardness of the IR-cutting film 10 in the case that the heat treatment is carried out at a temperature of not less than 150°C is such that the haze measured after the wear resistance test is not more than 4%. This hardness is similar to the surface hardness of a molten glass substrate, for example a hardness sufficient for automobile glass can be secured.

In the present embodiment, the starting material (silica component) used for forming the matrix 11 is a silicon alkoxide (monomer), but as described above, the starting material may be silicon alkoxide low polymers (oligomers) and other polymers, and ones in a state having silanol groups due to some or all of the alkoxyl groups in the silicon alkoxide having been hydrolyzed. These are hydrophilic, and act as a buffer in the matrix 11.

A dry gel of a silica component alone is known to be porous. In contrast with this, one characteristic feature of the present invention is that the matrix 11 is formed by an organic-inorganic composite film containing organic material in the silica component. The organic-inorganic composite film is a composite obtained by adding organic material such as a polyalkylene oxide as a hydrophilic organic polymer to the silicon alkoxide. It is thought that the organic material suppresses growth of silica component particles formed through the sol-gel reaction, the result being that the matrix 11 is not prone to becoming porous, and hence the hardness of the IR-cutting film 10 is increased. Moreover, the organic material relaxes film shrinkage due to evaporation of the solvent during the heating when forming the film through the sol-gel method (i.e. has a shrinkage relaxation effect), and hence cracking does not occur, and thus the IR-cutting film 10 can be formed to a thickness in a range of 200 to 4000 nm by carrying out the sol-gel method once.

Such organic material generally decreases in volume upon being heated at not less than 350°C, and hence if the IR-cutting glass 100 is heated at a temperature of not less than 600°C, then the thickness decreases by not less than 10%. For example, if the IR-cutting glass 100 is heated at a temperature of 620°C, then the thickness decreases by not less than 20%.

According to the present embodiment, by adjusting the pH of the solution and the amount of water in the solution to be coated onto the glass substrate 20 in the sol-gel method, the state of hydrolysis of the silicon alkoxide and the form of polymers of the silicon alkoxide in the solution are controlled. Moreover, a volatile strong acid is used so that the pH of the solution changes during the heat treatment. As a result, an IR-cutting film 10 that has high hardness and does not crack can be obtained through heat treatment at a relatively low temperature (less than 350°C).

In the embodiment described above, the IR-cutting film 10 is formed on one surface of the glass substrate 20, but such an IR-cutting film 10 may be formed on both surfaces of the glass substrate 20. Moreover, ITO fine particles 12 are used as the IR-cutting component, but conductive oxide fine particles such as ATO (antimony tin oxide (Sb-Sn oxide)) fine particles may be used instead, or such conductive oxide fine particles may be used together with the ITO fine particles 12. The particle diameter of the ATO fine particles is not more than 100 nm, preferably not more than 40 nm, more preferably in a range of 1 to 40 nm. Because ITO fine particles and/or ATO fine particles are included as the IR-cutting component, the IR shielding capability of the IR-cutting film 10 can be secured reliably.

Furthermore, other than conductive oxide fine particles such as ITO fine particles and ATO fine particles, lanthanum hexaboride (LaB₆) or the like may also be added. By adding lanthanum hexaboride or the like, the near infrared cutting capability of the IR-cutting glass 100 can be improved.

Moreover, regarding the starting material for the matrix 11 in the above embodiment, tetraethoxysilane, tetramethoxysilane, ethyl silicate (e.g. Ethyl Silicate 40 or Ethyl Silicate 48 made by Colcoat Co.,. Ltd.), methyl silicate, or the like can be used as the silica component.

Moreover, an organic-modified metal alkoxide may be added to the solution in an amount such that the number of moles of metal atoms in the metal alkoxide is not more than 10% of the number of moles of silicon atoms in the non-organic-modified silicon alkoxide.

As the solvent in the solution, instead of using ethanol, methanol, 1-propanol, isopropanol, t-butanol, or a mixture thereof may be used.

Moreover, another organic solvent may be added to the solution as required.

Furthermore, as a functional material, organic material such as an organic molecular substance or an organic polymer, or inorganic material such as inorganic ions or inorganic fine particles may be added to the solution within a range not exceeding the total silicon alkoxide silica component mass percentage (concentration).

Furthermore, a metal oxide other than a silicon oxide may be added to the solution within a range not exceeding the mass percentage of the silicon oxide, thus forming a composite oxide. In this case, it is desirable to add the metal oxide using a method that does not have an effect on the reactivity of the silicon alkoxide.

Moreover, in the sol-gel method, it is preferable to add to the solution a required amount of a metal compound that dissolves in the water or alcohol, in particular a metal compound that dissolves through simple dissociation. Examples of such metal compounds include chlorides, oxides, and nitrates of metals such as lithium, sodium, potassium, cesium, magnesium, calcium, cobalt, iron, nickel, copper, aluminum, gallium, indium, scandium, yttrium, lanthanum, cerium, and zinc.

Regarding boron, boric acid or a boron alkoxide chelated with a β-diketone such as acetylacetone can be added to the solution.

Regarding titanium or zirconium, an oxychloride thereof, an oxynitrate thereof, or an alkoxide thereof chelated with a β-diketone can be added to the solution.

Moreover, regarding aluminum, an alkoxide thereof chelated with a β-diketone can be added to the solution.

### Examples

Examples of the present invention will now be described.

### Example 1

A solution into which were put polyethylene glycol (PEG 400, made by Kanto Chemical Co., Inc.), pure water, a polyether phosphate ester type surfactant (Solsperse 41000: made by Lubrizol Japan Ltd.) as a polymeric dispersant, and denatured alcohol (Solmix (registered trademark) AP-7: made by Japan Alcohol Trading Co., Ltd. (hereinafter referred to as "AP-7")) in this order was stirred for 1 minute, and AP-7 to which 1 mass% of concentrated hydrochloric acid (made by Kanto Chemical Co, Inc.) had been added (hereinafter referred to as "1 mass% AP-7") was added to the solution, and stirring was carried out for 1 minute.

After that, tetraethoxysilane (KBE-04: made by Shin-Etsu Chemical Co., Ltd., silica component content = 28.8 mass%) was added to the above solution, and stirring was carried out for 4 hours at room temperature. After that, an ITO dispersion obtained by mixing ITO fine particles and ethanol together in a mass ratio of 2:3 and stirring for 4 hours was added to the above solution, and stirring was carried out for 30 minutes, whereby a coating liquid was obtained. The amounts of each of the liquids were made to be as shown in Table 1. Moreover, fine particles of diameter approximately 10 to 20 nm were used as the ITO fine particles in the ITO dispersion.

**Table 1**

| | | | | | | | | |
|---|---|---|---|---|---|---|---|---|
| (unit:g) | | | | | | | | |

| | Polyethylene glycol | Water | Polymeric dispersant | Denatured alcohol | 1 mass % AP-7 | Tetraethoxysilane | ITO dispersion | ATO dispersion |
|---|---|---|---|---|---|---|---|---|
| Example 1 | 0.036 | 5.86 | 0.162 | 12.44 | 3.00 | 6.25 | 2.25 | - |
| Example 2 | 0.036 | 5.86 | 0.234 | 12.37 | 3.00 | 6.25 | 2.25 | - |
| Example 3 | 0.036 | 5.86 | 0.198 | 12.41 | 3.00 | 6.25 | 2.25 | - |
| Example 4 | 0.041 | 5.86 | 0.270 | 12.33 | 3.00 | 6.25 | 2.25 | - |
| Example 5 | 0.030 | 4.86 | 0.195 | 14.83 | 3.00 | 5.21 | 1.88 | - |
| Example 6 | 0.036 | 5.86 | 0.234 | 12.37 | 3.00 | 6.25 | 2.25 | - |
| Example 7 | 0.036 | 5.86 | 0.234 | 12.37 | 3.00 | 6.25 | 2.25 | - |
| Example 8 | 0.000 | 5.78 | 0.540 | 13.52 | 3.00 | 6.25 | 2.25 | - |
| Example 9 | 0.000 | 7.76 | 1.080 | 8.63 | 3.00 | 8.33 | 3.00 | - |
| Example 10 | 0.023 | 4.86 | 0.165 | 12.44 | 3.00 | 5.21 | - | 2.50 |
| Comparative Example 1 | 0.036 | 5.86 | 0.162 | 12.44 | 3.00 | 6.25 | 2.25 | - |
| Comparative Example 2 | 0.036 | 5.86 | 0.162 | 12.44 | 3.00 | 6.25 | 2.25 | - |
| Comparative Example 3 | 0.005 | 5.86 | 0.023 | 12.61 | 3.00 | 6.25 | 2.25 | - |

Next, the above coating liquid was coated using a flow coating method under an environment of a relative humidity of 30% RH and a temperature of 20°C onto a surface (305 mm × 305 mm) of a washed 3.4 mm-thick soda-lime silica glass substrate (green glass having a UV absorbing capability). Drying of the soda-lime silica glass substrate onto which the coating liquid had been coated was then carried out as it is for approximately 5 minutes at room temperature, and then the substrate was put into an oven that had been preheated to 200°C and heated for 10 minutes, and was then cooled, whereby an IR-cutting glass was obtained.

For the IR-cutting glass obtained, the content of the ITO fine particles in the IR-cutting film (hereinafter referred to as the "ITO content"), the content of organic material in the IR-cutting film (hereinafter referred to as the "organic content"), and the content of the silica component in the IR-cutting film (hereinafter referred to as the "silica content") were determined by calculation from the component masses of the materials added to the coating liquid, and the results of determination are shown in Table 2. In the calculation, the mass of the ITO fine particles was assumed as being equal to 40 mass% of the ITO dispersion, the mass of the organic material was taken as being equal to the total mass of the polymeric dispersant and the polyethylene glycol, and the mass of the silica component was assumed as being equal to the silica component content in the tetraethoxysilane being 28.8 mass%.

**Table 2**

| | ITO content (mass %) | ATO content (mass %) | Organic content (mass %) | Silica content (mass %) |
|---|---|---|---|---|
| Example 1 | 31 | - | 7 | 62 |
| Example 2 | 30 | - | 9 | 61 |
| Example 3 | 31 | - | 8 | 61 |
| Example 4 | 30 | - | 10 | 60 |
| Example 5 | 30 | - | 9 | 61 |
| Example 6 | 30 | - | 9 | 61 |
| Example 7 | 30 | - | 9 | 61 |
| Example 8 | 28 | - | 16 | 56 |
| Example 9 | 26 | - | 23 | 51 |
| Example 10 | - | 31 | 8 | 61 |
| Comparative Example 1 | 33 | - | 0 | 67 |
| Comparative Example 2 | 31 | - | 7 | 62 |
| Comparative Example 3 | 33 | - | 1 | 66 |

Moreover, the thickness of the IR-cutting film obtained was determined to be 1330 nm from the result of observing a section of the film using a scanning electron microscope (SEM).

Furthermore, as a characteristic of the IR-cutting glass obtained, the haze on the surface on which the IR-cutting film was formed was measured after carrying out a wear resistance test thereon, and the measured haze was 1.3%. Here, the load in the wear resistance test was made to be 4.9 N (500 g), and the rotational speed was made to be 1000 revs.

### Example 2

A coating liquid was obtained as in Example 1, except that the polyethylene glycol was changed from PEG 400 to PEG 200 (made by Kanto Chemical Co, Inc.), and the materials were used in the amounts shown in Table 1, thus increasing the organic content as shown in Table 2. A surface (305 mm x 305 mm) of a washed 3.1 mm-thick soda-lime silica glass substrate (green glass having a UV absorbing capability) was coated with the coating liquid using the same method as in Example 1, thus obtaining an IR-cutting glass.

For the IR-cutting glass obtained, the results of determining the ITO content, the organic content, and the silica content in the IR-cutting film using the same method as in Example 1 are shown in Table 2.

Moreover, the thickness of the IR-cutting film obtained was determined using the same method as in Example 1 to be 1400 nm.

Furthermore, as a characteristic of the IR-cutting glass obtained, the haze after carrying out the wear resistance test on the surface on which the IR-cutting film was formed was measured using the same method as in Example 1, and the measured haze was 2.6%.

### Example 3

A coating liquid was obtained as in Example 1, except that the materials were used in the amounts shown in Table 1, thus increasing the organic content as shown in Table 2. A surface (305 mm x 305 mm) of a washed 3.1 mm-thick soda-lime silica glass substrate (green glass having a UV absorbing capability) was coated with the coating liquid using the same method as in Example 1, thus obtaining an IR-cutting glass.

For the IR-cutting glass obtained, the results of determining the ITO content, the organic content, and the silica content in the IR-cutting film using the same method as in Example 1 are shown in Table 2.

Furthermore, as a characteristic of the IR-cutting glass obtained, the haze after carrying out the wear resistance test on the surface on which the IR-cutting film was formed was measured using the same method as in Example 1 to be 2.1%.

### Example 4

A coating liquid was obtained as in Example 1, except that the polyethylene glycol was changed from PEG 400 to PEG 200 (made by Kanto Chemical Co, Inc.), and the materials were used in the amounts shown in Table 1, thus increasing the organic content as shown in Table 2. A surface (305 mm x 305 mm) of a washed 3.1 mm-thick soda-lime silica glass substrate (green glass having a UV absorbing capability) was coated with the coating liquid using the same method as in Example 1, thus obtaining an IR-cutting glass.

For the IR-cutting glass obtained, the results of determining the ITO content, the organic content, and the silica content in the IR-cutting film using the same method as in Example 1 are shown in Table 2.

Furthermore, as a characteristic of the IR-cutting glass obtained, the haze after carrying out the wear resistance test on the surface on which the IR-cutting film was formed was measured using the same method as in Example 1 to be 3.7%.

### Example 5

A coating liquid was obtained as in Example 1, except that the materials were used in the amounts shown in Table 1. A surface (305 mm x 305 mm) of a washed 3.1 mm-thick soda-lime silica glass substrate (green glass having a UV absorbing capability) was coated with the coating liquid using the same method as in Example 1, thus obtaining an IR-cutting glass.

For the IR-cutting glass obtained, the results of determining the ITO content, the organic content, and the silica content in the IR-cutting film using the same method as in Example 1 are shown in Table 2.

Furthermore, as a characteristic of the IR-cutting glass obtained, the haze after carrying out the wear resistance test on the surface on which the IR-cutting film was formed was measured using the same method as in Example 1 to be 2.7%.

### Example 6

An IR-cutting glass was obtained using the same method as in Example 2, except that the soda-lime silica glass substrate was changed to a 5 mm-thick privacy glass substrate (Legart (registered trademark) 50: made by Nippon Sheet Glass Co., Ltd.).

The thickness of the IR-cutting film obtained was determined using the same method as in Example 1 to be 1400 nm.

Furthermore, as a characteristic of the IR-cutting glass obtained, the haze after carrying out the wear resistance test on the surface on which the IR-cutting film was formed was measured using the same method as in Example 1 to be 2.1%.

### Example 7

An IR-cutting glass was obtained using the same method as in Example 2, except that the soda-lime silica glass substrate was changed to a 5 mm-thick privacy glass substrate (Legart (registered trademark) 35: made by Nippon Sheet Glass Co., Ltd.).

The thickness of the IR-cutting film obtained was determined using the same method as in Example 1 to be 1400 nm.

Furthermore, as a characteristic of the IR-cutting glass obtained, the haze after carrying out the wear resistance test on the surface on which the IR-cutting film was formed was measured using the same method as in Example 1 to be 2.7%.

### Example 8

An IR-cutting glass was obtained using the same method as in Example 2, except that the soda-lime silica glass substrate was changed to a 5 mm-thick privacy glass substrate (Legart (registered trademark) 50: made by Nippon Sheet Glass Co., Ltd.), and the materials were used in the amounts shown in Table 1, i.e. polyethylene glycol was not used.

Furthermore, as a characteristic of the IR-cutting glass obtained, the haze after carrying out the wear resistance test on the surface on which the IR-cutting film was formed was measured using the same method as in Example 1 to be 3.5%. Peeling away of the IR-cutting film was not observed over any of the surface.

### Example 9

An IR-cutting glass was obtained using the same method as in Example 8, except that the materials were used in the amounts shown in Table 1.

Furthermore, as a characteristic of the IR-cutting glass obtained, the haze after carrying out the wear resistance test on the surface on which the IR-cutting film was formed was measured using the same method as in Example 1 to be 3.4%. Peeling away of the IR-cutting film was not observed over any of the surface.

### Example 10

A solution into which were put polyethylene glycol (PEG 200), pure water, the polymeric dispersant, and AP-7 in this order was stirred for 1 minute, and then 1 mass% AP-7 was added to the solution, and stirring was carried out for 1 minute.

After that, tetraethoxysilane was added to the above solution, and stirring was carried out for 4 hours at room temperature. After that, an ATO dispersion obtained by mixing ATO fine particles and ethanol together in a mass ratio of 3:7 was added to the above solution, and stirring was carried out for 30 minutes, whereby a coating liquid was obtained. The amounts of each of the liquids were made to be as shown in Table 1.

Next, the above coating liquid was coated using a flow coating method under an environment of a relative humidity of 30% RH and a temperature of 20°C onto a surface (305 mm x 305 mm) of a washed 3.1 mm-thick soda-lime silica glass substrate (green glass having a UV absorbing capability). Drying of the soda-lime silica glass substrate onto which the coating liquid had been coated was then carried out as it is for approximately 5 minutes at room temperature, and then the substrate was put into an oven that had been preheated to 200°C and heated for 10 minutes, and was then cooled, whereby an IR-cutting glass was obtained.

For the IR-cutting glass obtained, the results of determining the content of the ATO fine particles (hereinafter referred to as the "ATO content"), the organic content, and the silica content in the IR-cutting film by calculation from the component masses of the materials added to the coating liquid are shown in Table 2. In the calculation, the mass of the ATO fine particles was assumed as being equal to 30 mass% of the ATO dispersion, the mass of the organic material was taken as being equal to the total mass of the polymeric dispersant and the polyethylene glycol, and the mass of the silica component was assumed to be equal to the silica component content in the tetraethoxysilane being 28.8 mass%.

Moreover, the thickness of the IR-cutting film obtained was determined using the same method as in Example 1 to be 1000 nm.

Furthermore, as a characteristic of the IR-cutting glass obtained, the haze after carrying out the wear resistance test on the surface on which the IR-cutting film was formed was measured using the same method as in Example 1 to be 3.5%.

### Comparative Example 1

An IR-cutting glass was obtained using the same method as in Example 1, except that the temperature of the heating carried out after the drying for approximately 5 minutes at room temperature on the soda-lime silica glass substrate onto which the coating liquid had been coated was changed from 200°C to 620°C.

For the IR-cutting glass obtained, the results of determining the ITO content, the organic content, and the silica content in the IR-cutting film using the same method as in Example 1 are shown in Table 2. For the organic content, it is thought that almost all of the organic material is evaporated off due to the heating being carried out at 620°C. The organic content was thus set to 0.

Moreover, the thickness of the IR-cutting film obtained was determined using the same method as in Example 1 to be 1060 nm.

Furthermore, upon visually inspecting the surface of the IR-cutting glass obtained, it was found that innumerable cracks had arisen over the whole surface.

### Comparative Example 2

An IR-cutting glass was obtained using the same method as in Example 1, except that the heating after the drying for approximately 5 minutes at room temperature of the soda-lime silica glass substrate onto which the coating liquid had been coated was not carried out.

The thickness of the IR-cutting film obtained was determined using the same method as in Example 1 to be 1340 nm.

Furthermore, for the characteristic of the IR-cutting glass obtained, upon carrying out the wear resistance test on the surface on which the IR-cutting film was formed, peeling away of the film occurred, and hence it was ascertained that the strength of the film was low.

### Comparative Example 3

A coating liquid was obtained as in Example 1, except that the materials were used in the amounts shown in Table 1, thus reducing the organic content as shown in Table 2. A surface (305 mm x 305 mm) of a washed 3.1 mm-thick soda-lime silica glass substrate (green glass having a UV absorbing capability) was coated with the coating liquid using the same method as in Example 1, thus obtaining an IR-cutting glass.

For the IR-cutting glass obtained, the results of determining the ITO content, the organic content, and the silica content in the IR-cutting film using the same method as in Example 1 are shown in Table 2.

Moreover, upon visually inspecting the surface of the IR-cutting glass obtained, haze was observed, the haze being found to be greater than 7%.

As is clear from the results of the wear resistance tests, it was found that for the IR-cutting film of the IR-cutting glass according to each of Examples 1 to 10 of the present examples, the haze after the wear resistance test was not more than 7% (not more than 4%), and hence the IR-cutting film had sufficient hardness, whereas for the IR-cutting film according to each of Comparative Examples 1 to 3, either cracks arose over the whole surface, or else the film peeled away upon carrying out the wear resistance test, or else the haze before carrying out the wear resistance test was greater than 7%, and hence the hardness was insufficient.

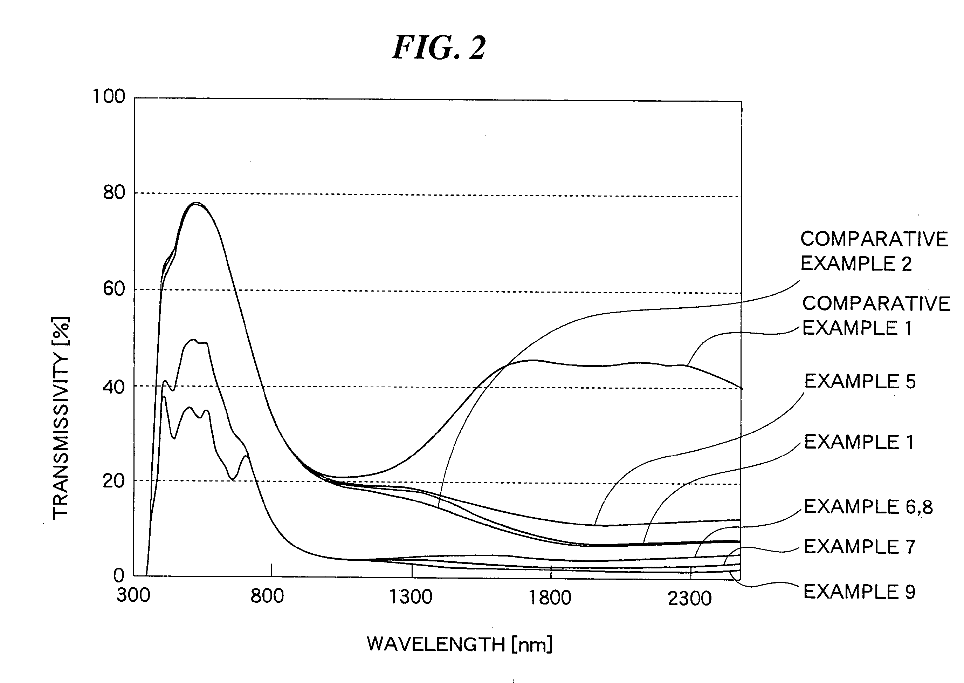

The transmitted light spectra over a wavelength range of 300 to 2500 nm obtained by measurement on the IR-cutting glasses of Examples 1, 5, 6, 7, 8 and 9, and Comparative Examples 1 and 2 are shown in FIG. 2, and the transmissivities to light in a first wavelength region of 1000 to 1600 nm and a second wavelength region of 1600 to 2500 nm are shown in Table 3. The transmissivities for Example 10 are also shown in Table 3.

The measurement of the transmissivity to light of wavelength 300 to 2500 nm for each of the above IR-cutting glasses was carried out by measuring using a spectrophotometer at a pitch of 1 nm in each wavelength region. The range between the maximum value and the minimum value shown in Table 3 indicates the range of the transmissivity values measured over each wavelength region.

**Table 3**

| | Transmissivity (%) | |
|---|---|---|
| | 1000-1600 nm | 1600-2500 nm |
| Example 1 | Max: 20.8 | Max: 11.9 |
| | Min: 11.9 | Min: 7.4 |
| Example 5 | Max: 20.5 | Max: 14.7 |
| | Min: 14.7 | Min: 11.2 |
| Example 6 | Max: 5.0 | Max: 5.5 |
| | Min: 3.9 | Min: 3.8 |
| Example 7 | Max: 4.5 | Max: 3.4 |
| | Min: 3.3 | Min: 2.3 |
| Example 8 | Max: 4.7 | Max: 5.8 |
| | Min: 3.4 | Min: 3.8 |
| Example 9 | Max: 3.6 | Max: 2.4 |
| | Min: 2.2 | Min: 1.5 |
| Example 10 | Max: 35.9 | Max: 38.0 |
| | Min: 18.8 | Min: 27.8 |
| Comparative Example 1 | Max: 43.5 | Max: 45.7 |
| | Min: 21.0 | Min: 39.6 |
| Comparative Example 2 | Max: 20.7 | Max: 9.5 |
| | Min: 9.5 | Min: 6.8 |

As is clear from the results in Table 3 and FIG. 2, it can be seen that for the IR-cutting glass of each of Examples 1, 5, 6, 7, 8 and 9, the transmissivity to light in the first wavelength region of 1000 to 1600 nm is not more than 30%, and the transmissivity to light in the second wavelength region of 1600 to 2500 nm is not more than 20%, and hence the IR-cutting glass has an infrared cutting capability.

Moreover, from the results in Table 3, it can be seen that for the IR-cutting glass of Example 10, although the transmissivity to light in the first wavelength region of 1000 to 1600 nm does exceed 30% in part, and the transmissivity to light in the second wavelength region of 1600 to 2500 nm does exceed 20% in part, the IR-cutting glass nevertheless has an infrared cutting capability.

Furthermore, upon putting the IR-cutting glass of Example 1 into an oven that had been preheated to 600°C and heating for 10 minutes, and then cooling, the thickness decreased by approximately 20% from 1330 nm to 1060 nm. Moreover, it was found that there were cracks in the surface of the film on the IR-cutting glass after the heating at 600°C. This shows that, as described earlier, through the IR-cutting film of the IR-cutting glass of the present invention containing organic material, and the organic material being present between silica component particles, the effect of film shrinkage due to solvent evaporation is relaxed, and also shows that upon heating to a high temperature of, for example, 600°C, the relaxing capability of the organic material is lost due to the organic material evaporating, whereby film shrinkage increases, and cracks arise in the film surface. Moreover, it was found that the infrared cutting capability deteriorates upon heating to 600°C. This result can also easily be inferred from the difference between the optical properties for Example 1 in which the heating temperature was 200°C and the optical properties for Comparative Example 1 in which the heating temperature was 620°C.

### Industrial Applicability

An infrared ray-cutting glass according to an embodiment of the present invention can be used as window glass for a building, window glass for a mobile object or a vehicle such as an automobile or a train, or glass for a mobile object, and in particular can be used as automobile glass in which an IR-cutting film is formed on a surface of automobile door glass inside the automobile.

## Claims

1. An infrared ray-cutting glass in which an infrared ray-cutting film is formed on at least one surface of a glass substrate, **characterized in that** said infrared ray-cutting film contains an infrared ray-cutting component in an organic-inorganic composite film in which are composited organic material and an inorganic oxide, and the infrared ray-cutting glass has a haze of not more than 7% measured after a wear resistance test being carried out on the surface on which said infrared ray-cutting film is formed in accordance with Japanese Industrial Standards JIS R 3212.

2. An infrared ray-cutting glass as claimed in claim 1, **characterized in that** the haze is not more than 4%.

3. An infrared ray-cutting glass as claimed in claim 1, **characterized in that** a content of said infrared ray-cutting component is in a range of 20 to 45% relative to a total mass of said infrared ray-cutting film.

4. An infrared ray-cutting glass as claimed in claim 1, **characterized in that** said infrared ray-cutting component comprises a component not containing a fluorine component.

5. An infrared ray-cutting glass as claimed in claim 1, **characterized in that** said infrared ray-cutting component contains ITO fine particles and/or ATO fine particles.

6. An infrared ray-cutting glass as claimed in claim 5, **characterized in that** said ITO fine particles and/or ATO fine particles have a particle diameter of not more than 100 nm.

7. An infrared ray-cutting glass as claimed in claim 1, **characterized in that** a content of said organic material is in a range of 2 to 60% relative to a total mass of said infrared ray-cutting film.

8. An infrared ray-cutting glass as claimed in claim 7, **characterized in that** said organic material contains a hydrophilic organic polymer.

9. An infrared ray-cutting glass as claimed in claim 8, **characterized in that** said hydrophilic organic polymer comprises one of a polyalkylene oxide and a polyalkylene oxide thermal decomposition product.

10. An infrared ray-cutting glass as claimed in claim 1, **characterized in that** said inorganic oxide is silica.

11. An infrared ray-cutting glass as claimed in claim 1, **characterized in that** a content of said inorganic oxide is in a range of 20 to 78% relative to a total mass of said infrared ray-cutting film.

12. An infrared ray-cutting glass as claimed in claim 11, **characterized in that** the content of said inorganic oxide is in a range of 40 to 78% relative to the total mass of said infrared ray-cutting film.

13. An infrared ray-cutting glass as claimed in claim 1, **characterized in that** said infrared ray-cutting film has a thickness in a range of 200 to 4000 nm.

14. An infrared ray-cutting glass as claimed in claim 1, **characterized in that** a thickness of said infrared ray-cutting film decreases by not less than 10% upon heating at 600°C.

15. An infrared ray-cutting glass as claimed in claim 1, **characterized by** having a transmissivity to light of wavelength 1000 to 1600 nm of not more than 30%, and a transmissivity to light of wavelength 1600 to 2500 nm of not more than 20%.

16. An infrared ray-cutting glass as claimed in claim 1, **characterized by** being used as window glass for a mobile object, a vehicle, or a building.

17. An infrared ray-cutting glass as claimed in claim 1, **characterized in that** said infrared ray-cutting film is formed on said glass substrate by a sol-gel method, and a firing temperature at which said infrared ray-cutting film is solidified in a gel state while carrying out the sol-gel method is in a range of 100 to 350°C.

18. An infrared ray-cutting glass as claimed in claim 17, **characterized in that** the firing temperature is not more than 250°C.

19. An infrared ray-cutting glass as claimed in claim 1, **characterized in that** said glass substrate is made of soda-lime silica glass.

20. An infrared ray-cutting glass as claimed in claim 1, **characterized in that** said organic-inorganic composite film contains phosphorus.
